# EUROPÄISCHE PATENTSCHRIFT

(11) **EP 4 169 610 B1**
(45) Veröffentlichungstag und Bekanntmachung des Hinweises auf die Patenterteilung: **02.04.2025**
(21) Anmeldenummer: 22210189.1
(22) Anmeldetag: 12.05.2020
(51) Int. Cl.: B01J 19/30, B01J 8/44, B01D 3/32

(54) **TRAGROST FÜR FÜLLKÖRPERPACKUNGEN**
SUPPORT GRID
GRILLE DE SUPPORT

(30) Priorität: 17.05.2019 DE 102019207260
(43) Veröffentlichungstag der Anmeldung: 26.04.2023
(62) Teilanmeldung aus: 20729638.5
(73) Patentinhaber: SGL Carbon SE, 65201 Wiesbaden (DE)
(72) Erfinder: SPULLER, Ralph, 86405 Meitingen (DE)

(56) Entgegenhaltungen:
- DE-A1- 2 516 078
- DE-A1- 3 842 637
- DE-B3- 102006 028 407

## Beschreibung

Aus dem Stand der Technik sind vielerlei unterschiedliche Tragroste für Füllkörperpackungen bekannt.

In der DE 10 2004 015 393 A1 sind Tragroste insbesondere zum Einsatz in der Umgebung von aggressiven Medien zur Lagerung einer Aufschüttung in einer Kolonne beschrieben. Die Tragroste haben mehrere trapezförmige Ausformungen, die jeweils zwei Seitenflächen, eine obere Stirnfläche sowie nach unten orientierte Auflageflächen aufweisen. Jede trapezförmige Ausformung scheint durch ein separates, trapezförmig umgeformtes Plattenelement gebildet zu sein. Ein Tragrost mit mehreren parallel zueinander verlaufenden trapezförmigen Ausformungen entsteht, wenn man die umgeformten Plattenelemente parallel zueinander, Kante an Kante ausrichtet. Der Aufbau ist kompliziert, da zusätzlich kompliziert aufgebaute und spezifisch angepasste Klemm- und Sperrelemente erforderlich sind. Als Materialien werden unter anderem genannt: hochfluorierte Kunststoffe, zum Beispiel PFA, MFA, FEP, PTFE oder teilfluorierte Kunststoffe, z.B. ECTFE, PVDF, und schwer schweißbare Kunststoffe, z.B. PE-X oder PE-UHMW.

Die DE 38 42 637 A1 beschreibt ein kombiniertes Bauteil, das zugleich als Füllkörpertragrost und als Sammel- oder Verteilerboden fungieren soll. Dabei sind geneigte Ableitplatten vorgesehen, von deren Unterkante Flüssigkeit in Rinnen gelangen soll, die Teil des Bauteils sind. Die Verbindung zwischen Rinne und Ableitplatte kann mit Hilfe eines Trägers hergestellt sein. Dieser wird in einen Schlitz der Rinnenwände und in einen Schlitz der Ableitplatte eingeschoben. Ebenfalls beschrieben sind Varianten des Bauteils mit gegenläufig geneigten Ableitplatten, wobei je Rinne zwei übereinander geneigt angeordnete Ableitplatten vorgesehen werden. Die Flüssigkeit läuft zunächst auf der oberen geneigten Platte entlang und tropf von der unteren Kante derselben auf die nächste Ableitplatte ab.

Der in der Patentschrift DE 10 2006 028 407 B3 gezeigte Tragrost umfasst plattenförmige, zur Einbauebene senkrecht angeordneten Tragleisten, die mit zur Einbauebene senkrecht angeordneten Abstandsleisten kreuzförmig verbunden sind. In Richtung der Abstandsleisten sind Konturleisten angeordnet, die Öffnungen aufweisen. Die Konturleisten sind geneigt, so dass sie eine Auflagefläche für die Füllkörper bieten. Die Tragleisten sind nicht durchgehend ausgebildet. Der gezeigte Tragrost umfasst vormontierte Gruppen aus Tragleisten, Abstandsleisten und Konturleisten, wobei die Tragleisten der einzelnen Gruppen um ihre Breite versetzt zueinander angeordnet sind und sich so weit überlappen, dass sie durch von oben eingebrachte Steckklammern verbunden werden können.

Der vorliegenden Erfindung liegt die Aufgabe zugrunde, einen Tragrost für Füllkörperpackungen bereitzustellen, der besonders wirtschaftlich hergestellt werden kann, aufgrund seiner Konstruktion besonders leicht und zugleich mechanisch besonders belastbar ist und - im Wesentlichen ohne Beeinträchtigung der Tragbelastbarkeit - in vormontierte Gruppen aufteilbar ausgeführt werden kann, die durch Mannlöcher in Kolonnen eingebracht werden können.

Diese Aufgabe wird gelöst durch einen Tragrost für Füllkörperpackungen, aufweisend Tragleisten und einander entgegengesetzt geneigte Dachleisten, wobei Tragleisten und Dachleisten einander kreuzen, die Neigung jeder Dachleiste durch mindestens eine in mindestens eine Tragleiste eingebrachte Dachleistenaufnahmenut definiert ist, in welche die Dachleiste aufgenommen ist und die Ausrichtung jeder Tragleiste durch mindestens eine Tragleistenaufnahmenut stabilisiert ist, in welche die Tragleiste aufgenommen ist.

Viele Tragroste des Stands der Technik weisen Abstandsleisten auf, welche die parallel zueinander verlaufenden Tragleisten kreuzen und letztlich dazu dienen, die Tragleisten gegen ein seitliches Abkippen abzustützen. Beim erfindungsgemäßen Tragrost wird diese Funktion von den Dachleisten ganz oder teilweise mitübernommen. Die Dachleisten übernehmen sowohl die Stützfunktion der aus dem Stand der Technik bekannten Abstandsleisten und bilden zugleich die Oberfläche, auf der die Füllkörper aufliegen. Dies bedeutet eine erhebliche Material- und Kostenersparnis. Der erfindungsgemäße Tragrost ist deshalb besonders wirtschaftlich herstellbar.

Es ist allgemein bevorzugt, wenn die Tragleisten nicht geneigt sind. Im Allgemeinen übersteigt die Breite jeder Tragleiste die Stärke jeder Tragleiste um ein Vielfaches, so dass die Tragleisten je zwei gegenüber angeordnete Hauptoberflächen aufweisen. Vorzugsweise liegen sämtliche Hauptoberflächen der Tragleisten in Ebenen, die zueinander parallel verlaufen. Zueinander parallel bedeutet im Zusammenhang mit der vorliegenden Erfindung, dass die Ebenen einen Winkel von höchstens 10° zueinander einnehmen.

Die Tragleisten können zueinander auch geneigt sein. Jedoch wird angenommen, dass der Tragrost dann weniger Verwindungssteif ist und somit weniger belastbar ist.

Einander entgegengesetzt geneigt bedeutet, dass die Dachleisten (bei vier oder mehr Dachleisten je zwei Dachleisten) zueinander ähnlich wie die beiden Hälften eines Satteldaches ausgerichtet sind. Im Allgemeinen sind die oberen Längskanten und die unteren Längskanten der Dachleisten beabstandet, so dass zwischen benachbarten Leisten je eine Fludiddurchtrittsöffnung ausgebildet ist. Der Fachmann wählt die Breite der Fluiddurchtrittsöffnungen gemäß der Abmessungen der aufzubringenden Füllkörpern so, dass die Füllkörper nicht zwischen den Längskanten der Dachleisten hindurchfallen können.

Durch die Neigung der Dachleisten und die vertikale Ausrichtung der Kolonne, in die der Tragrost eingebaut werden soll, wird für jede Dachleiste ein oberer Dachleistenbereich und ein unterer Dachleistenbereich definiert, wobei der obere Dachleistenbereich all diejenigen Teile der Dachleiste umfasst, die näher an einer oberen Längskante der Dachleiste liegen und der untere Dachleistenbereich all diejenigen Teile der Dachleiste umfasst, die näher an einer unteren Längskante der Dachleiste liegen. Vorzugsweise wird mindestens ein unterer Bereich jeder Dachleiste in je mindestens eine Dachleistenaufnahmenut aufgenommen. In Tragleisten eingebrachte Dachleistenaufnahmenuten sind also bevorzugt von den oberen Längskanten der Tragleisten aus in die Tragleisten eingebracht.

Die Angabe, dass Tragleisten und Dachleisten einander kreuzen, bezieht sich auf den Verlauf der projizierten Längskanten von Tragleisten und Dachleisten. Bei einander kreuzenden Tragleisten und Dachleisten schneidet mindestens eine projizierte Längskante einer Tragleiste eine projizierte Längskante einer Dachleiste, wenn man den Tragrost durch Parallelprojektion entlang der Kolonnenlängsachse in eine orthogonal zur Kolonnenlängsachse ausgerichtete Ebene projiziert.

In typischen Ausgestaltungen des erfindungsgemäßen Tragrosts kreuzen Tragleisten einander nicht und die Dachleisten kreuzen einander auch nicht.

Erfindungsgemäß ist die Ausrichtung jeder Tragleiste durch mindestens eine Tragleistenaufnahmenut stabilisiert, in welche die Tragleiste aufgenommen ist. Mit Stabilisierung der Ausrichtung ist hier insbesondere gemeint, dass die Tragleiste durch die Aufnahme in die Tragleistenaufnahmenut nicht mehr uneingeschränkt um Ihre Längsachse rotiert werden kann. Die Rotation um die Längsachse wird dadurch verhindert, dass der in die Tragleistenaufnahmenut aufgenommene Abschnitt der Tragleiste an den Wänden der Tragleistenaufnahmenut anstößt. Es versteht sich, dass man die Form der Tragleistenaufnahmenut vorzugsweise je so an den jeweils aufzunehmenden Abschnitt der Tragleiste anpasst, dass die Tragleiste in der Tragleistenaufnahmenut formschlüssig anliegt. Dies steigert die Verwindungssteifigkeit des Tragrostes.

Vorzugsweise ist die Ausrichtung mindestens einer Tragleiste durch mehr als eine Tragleistenaufnahmenut stabilisiert. Dies wirkt unerwünschten Torsionen der Tragleiste um ihre Längsachse besonders effizient entgegen. Denn eine Torsion ist im Wesentlichen immer nur in den Bereichen der Tragleiste möglich, die außerhalb der Tragleistenaufnahmenute liegen.

Im Zusammenhang mit der vorliegenden Erfindung wurde entdeckt, dass die Tragleisten aus wesentlich kostengünstigeren, weniger torsionssteifen Materialien gefertigt werden können, ohne dass dadurch die Verwindungssteifigkeit des Tragrostes insgesamt nachließe, wenn Tragleistenaufnahmenute in hinreichend kleinen Abständen vorliegen. Hierauf aufbauend werden besonders vorteilhafte Weiterbildungen der Erfindung vorgeschlagen. Gemäß dieser Weiterbildungen der Erfindung sind Abschnitte der Tragleiste, die in unterschiedlichen Tragleistenbereichen liegen, in unterschiedliche Tragleistenaufnahmenute aufgenommen.

Vorzugsweise ist ein Abschnitt der Tragleiste, der in einem Tragleistenbereich liegt, in eine Tragleistenaufnahmenut aufgenommen und ein anderer Abschnitt der Tragleiste, der in einem anderen Tragleistenbereich liegt, in eine andere Tragleistenaufnahmenut aufgenommen. Der eine Tragleistenbereich erstreckt sich entlang der Längsachse der Tragleiste von einem Ende bis zur Mitte der Tragleiste. Der andere Tragleistenbereich erstreckt sich entlang der Längsachse der Tragleiste von der Mitte bis zum anderen Ende der Tragleiste. Vorteilhaft sind dabei wiederum in jedem der beiden Tragleistenbereiche mindestens zwei, drei oder besonders bevorzugt mindestens vier Abschnitte der Tragleiste in unterschiedliche Tragleistenaufnahmenute aufgenommen. Dabei halten die Tragleistenaufnahmenute im Allgemeinen einen Mindestabstand zur nächsten Tragleistenaufnahmenut von mindestens 2 % der Länge der Tragleiste ein. Der Abstand zweier Tragleistenaufnahmenute wird am aufgebauten Tragrost zwischen den beiden einander nächsten Punkten der beiden Nute bestimmt.

Für den erfindungsgemäßen Tragrost wird deutlich weniger Leistenmaterial benötigt - etwa im Vergleich zu der in DE 10 2006 028 407 B3 beschriebenen Tragrostkonstruktion. An Stelle von Abstandsleisten können erfindungsgemäß nun einfache Nuten zur Aufnahme der Tragleisten dienen. Grob vereinfacht schlägt die vorliegenden Erfindung vor, ein Bauteil des Stands der Technik durch eine Nut - also durch eine Aussparung in einem Bauteil - zu ersetzten. Dabei kommt es trotz des konstruktionsbedingt eingesparten Materials nicht zu Stabilitätseinbußen. Es ist besonders bevorzugt, wenn mindestens eine der Tragleistenaufnahmenute in mindestens eine Dachleiste eingebracht ist. Die gilt auch und insbesondere für die Tragleistenaufnahmenute, die im Zusammenhang mit den oben genannten, besonders vorteilhaften Weiterbildungen der Erfindung beschrieben sind. Beispielsweise können mindestens 50 %, insbesondere mindestens 65 % oder, besonders bevorzugt mindestens 80 % aller Tragleistenaufnahmenute in Dachleisten eingebracht sein. Die Dachleisten und Tragleisten stabilisieren sich dann gegenseitig. Durch das synergistische Zusammenwirken der gegenseitig in Aufnahmenuten aufgenommenen Dach- und Tragleisten kann ein besonders leichter und stabiler Tragrost bereitgestellt werden.

Alternativ (oder zusätzlich) ist es aber auch möglich, dass die Tragleistenaufnahmenut (oder mindestens eine Tragleistenaufnahmenut) nicht in eine Dachleiste, sondern in ein weiteres, von Dachleisten und Tragleisten verschiedenes Bauteil eingebracht ist.

Das weitere Bauteil kann ein Tragleistenaufnahmeelement sein, über das eine auf den Tragrost wirkende Schwerkraft auf die Kolonnenwand übertragen werden kann. Das Tragleistenaufnahmeelement kann z.B. so ausgebildet sein, dass es auf einer Auflagefläche mindestens eines an der Kolonnenwand vorgesehenen Stützelements aufliegen kann. Das Tragleistenaufnahmeelement kann z.B. eine Tragleistenaufnahmeleiste sein.

Die Erfindung schließt zusätzliche Abstandsleisten nicht aus, die kreuzförmig mit den Tragleisten verbunden sind und in Richtung der Dachleisten angeordnet sind, so wie in DE 10 2006 028 407 B3 beschrieben. Dachleisten sind in DE 10 2006 028 407 B3 als Konturleisten bezeichnet.

Da erfindungsgemäß die Abstandsleisten im Wesentlichen entbehrlich sind, soll die Masse gegebenenfalls vorhandener Abstandsleisten jedoch höchstens 0 bis 150 % der Masse der Tragleisten, vorzugsweise höchstens 0 bis 100 % der Masse der Tragleisten, weiterhin bevorzugt höchstens 0 bis 75 % der Masse der Tragleisten, besonders bevorzugt höchstens 0 bis 50 % der Masse der Tragleisten, ganz besonders bevorzugt höchstens 0 bis 20 % der Masse der Tragleisten betragen. Idealerweise weist der erfindungsgemäße Tragrost keine Abstandsleisten auf. Als Abstandsleiste wird hierin jede Leiste definiert, deren beide Hauptoberflächen orthogonal zu einer Tragoberfläche des Tragrosts verlaufen und die kreuzförmig mit mindestens zwei Tragleisten verbunden ist. Als Tragoberfläche wird dabei die Fläche bezeichnet, in die oberen Längskanten der Tragleisten fallen.

Es ist nicht zwingend erforderlich, dass an jeder Stelle, an der eine Tragleiste eine Dachleiste kreuzt, mindestens eine der beiden Leisten eine Nut aufweist, in welche die andere Leiste aufgenommen ist. Beispielsweise können die Leisten in einem Bereich, in dem sie sich kreuzen auch schmaler sein, als in anderen Bereichen. In diesem Bereich kann dann die tiefste Kante der Dachleiste oberhalb der höchsten Kante der Tragleiste verlaufen, so dass ein kreuzen beider Leisten an dieser Stelle ganz ohne Nut möglich ist. Zwingend erforderlich ist lediglich, dass die Neigung jeder Dachleiste durch mindestens eine in mindestens eine Tragleiste eingebrachte Dachleistenaufnahmenut definiert ist. Für jede Dachleiste muss also nicht mehr als eine, in mindestens eine Tragleiste eingebrachte Dachleistenaufnahmenut vorhanden sein. Dies genügt, um die Neigung der Dachleiste zu definieren.

Allerdings erwies es sich als besonders vorteilhaft, wenn die Neigung jeder Dachleiste durch mehr als eine, in verschiedene Tragleisten eingebrachte Dachleistenaufnahmenute definiert ist. Dann sind die von den Dachleisten überbrückten Bereiche kürzer. Dieselbe Verwindungssteifigkeit des Tragrostes kann dann mit noch dünneren Leisten erreicht werden, deren Herstellung einen deutlich geringeren Material- und Arbeitsaufwand erfordern. Hierauf aufbauend werden vorteilhafte Weiterbildungen der Erfindung vorgeschlagen. Gemäß dieser Weiterbildungen der Erfindung sind Abschnitte der Dachleiste, die in unterschiedlichen Dachleistenbereichen liegen, in unterschiedliche Dachleistenaufnahmenute aufgenommen. Vorzugsweise ist ein Abschnitt der Dachleiste, der in einem Dachleistenbereich liegt, in eine Dachleistenaufnahmenut aufgenommen und ein anderer Abschnitt der Dachleiste, der in einem anderen Dachleistenbereich liegt, in eine andere Dachleistenaufnahmenut aufgenommen. Der eine Dachleistenbereich erstreckt sich entlang der Längsachse der Dachleiste von einem Ende bis zur Mitte der Dachleiste. Der andere Dachleistenbereich erstreckt sich entlang der Längsachse der Dachleiste von der Mitte bis zum anderen Ende der Dachleiste. Vorteilhaft sind dabei wiederum in jedem der beiden Dachleistenbereiche mindestens zwei, drei oder besonders bevorzugt mindestens vier Abschnitte der Dachleiste in unterschiedliche Dachleistenaufnahmenute aufgenommen. Dabei halten die Dachleistenaufnahmenute im Allgemeinen einen Mindestabstand zur nächsten Dachleistenaufnahmenut von mindestens 2 % der Länge der Dachleiste ein. Der Abstand zweier Dachleistenaufnahmenute wird am aufgebauten Dachrost zwischen den beiden einander nächsten Punkten der beiden Nute bestimmt. Ganz besonders vorteilhafte Weiterbildungen der Erfindung weisen zudem die Merkmale der weiter oben beschriebenen, besonders vorteilhaften Weiterbildungen der Erfindung auf.

Es kann an jeder Stelle, an der eine Tragleiste eine Dachleiste kreuzt, eine Dachleistenaufnahmenut in die Tragleiste eingebracht sein und/oder eine Tragleistenaufnahmenut in die Dachleiste eingebracht sein.

Es ist vorteilhaft, wenn an mindestens einer Stelle, an der eine Tragleiste eine Dachleiste kreuzt, eine Dachleistenaufnahmenut und eine Tragleistenaufnahmenut ineinandergreifen. Durch das Ineinandergreifen der Nuten können entweder die Dachleisten dünner ausgeführt werden oder kann die Anzahl an Tragleisten reduziert werden, da das Ineinandergreifen der Nuten eine besonders verwindungssteife Verbindung der Leisten bewirkt. Letztlich wird dieselbe Verwindungssteifigkeit mit weniger breiten, weniger Dicken und/oder weniger Leisten erreicht, also ein den Anforderungen an die mechanische Stabilität vollkommen genügender Tragrost mit besonders wenig Material zugänglich gemacht. Dieser hat sich in der verfahrenstechnischen Anwendung nicht zuletzt auch deshalb besonders bewährt, da das ineinandergreifen der Nuten zu einem insgesamt besonders dünnen aber dennoch hoch belastbaren Tragrost führt. Bei gegebener Kolonnenhöhe steht ein größerer Anteil der Kolonne für die Füllkörperschüttung zur Verfügung, so dass z.B. die Effizienz einer darin durchzuführenden thermischen Trennoperation gesteigert werden kann.

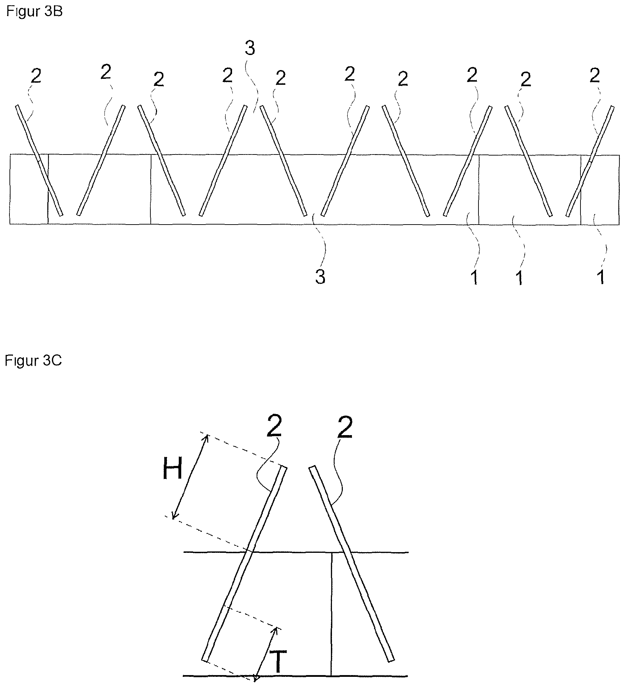

An mindestens einer Stelle, an der eine Tragleiste eine Dachleiste kreuzt, ist die Tiefe T der Tragleistenaufnahmenut bevorzugt kleiner, als die Höhe H eines über die Tragleiste hinausstehenden Abschnitts der Dachleiste. Die hier angegebene Höhe und Tiefe werden am zusammengesteckten Tragrost z.B. mit einem Maßband entlang der dem Kolonnenkopf zugewandten oberen Oberfläche der Dachleiste abgemessen. Dies ist in Fig.3C beispielhaft angedeutet. Die Masse der aufliegenden Füllkörper bewirkt insbesondere eine Biegung des über die Tragleiste hinausstehenden Abschnitts der Dachleiste und eine Biegung des sich über die Tiefe der Tragleistenaufnahmenut hinaus nach unten erstreckenden Abschnitts der Dachleiste. Durch die Biegung des über die Tragleiste hinausstehenden Abschnitts der Dachleiste verringert sich die Breite der Lücken zwischen den oberen Längskanten benachbarter, aufeinander zugeneigter Dachleisten. Dies ist unkritisch, da eine Verringerung der Breite kein Risiko eines unerwünschten Durchfallens von Schüttungsformkörpern birgt. Durch die Biegung des sich über die Tiefe der Tragleistenaufnahmenut hinaus nach unten erstreckenden Abschnitts der Dachleiste jedoch steigert sich die Breite der Lücken zwischen den unteren Längskanten benachbarter, voneinander weggeneigter Dachleisten. Dies birgt das Risiko eines unerwünschten Durchfallens von Schüttungsformkörpern. Wenn T kleiner ist als H, werden durch die Masse der aufliegenden Füllkörper die unteren Kanten der Dachleisten weniger stark auseinandergebogen, so dass insgesamt ein Durchfallen von Schüttungsformkörpern wirksam verhindert wird. Wäre hingegen H kleiner T könnte dieses Ziel nur mit dickeren, verwindungssteiferen Dachleisten erreicht werden.

Erfindungsgemäße Tragroste weisen Fluiddurchtrittsöffnungen auf, durch die Gase aufsteigen können und Flüssigkeiten absteigen können. Im Allgemeinen sind Fluiddurchtrittsöffnungen in die Dachleisten eingebracht. Außerdem stellen die Lücken zwischen den oberen Längskanten benachbarter, aufeinander zugeneigter Dachleisten und die Lücken zwischen den unteren Längskanten benachbarter, voneinander weggeneigter Dachleisten Fluiddurchtrittsöffnungen dar. Ein erfindungsgemäßer Tragrost weist also Fluiddurchtrittsöffnungen in und/oder zwischen Dachleisten auf. Die Summe der durch die Fluiddurchtrittsöffnungen definierten Fluiddurchtrittsflächen ist vorzugsweise größer als der Kolonnenquerschnitt. Die Summe wird gebildet, indem man die in der jeweiligen Dachleistenebene gemessenen Fluiddurchtrittsflächen aller in die Dachleisten eigebrachten Fluiddurchtrittsöffnungen addiert mit den Flächen aller Fluiddurchtrittsöffnungen zwischen oberen und unteren Längskanten der Dachleisten.

Hinsichtlich der Wahl des Materials der Tragleisten und Dachleisten bestehen keine besonderen Einschränkungen. Die Tragleisten und/oder Dachleisten können aus allen Materialien und Materialkombinationen aufgebaut sein, welche dem Fachmann allgemein als zur Herstellung von Kolonneneinbauten bekannt sind. Dies schließt Verbundmaterialien und Schichtverbundmaterialien ein, die jeweils auch beschichtet sein können. Vorzugsweise weisen die Tragleisten und/oder Dachleisten ein nicht selbständig stoffschlüssig fügbares Material auf. Mit "nicht selbständig stoffschlüssig fügbar" ist ein Material gemeint, bei dem zwei ebene Oberflächen des Materials nicht durch eine Verbindung im Material selbst verbindbar sind. Ein nicht stoffschlüssig fügbares Material ist also insbesondere ohne Schweißzusatzwerkstoffe nicht schweißbar. Dann kommen die Vorteile der Erfindung vollständig zu tragen, da an Stelle der erfindungsgemäß vorgeschlagenen Aufnahmenuten stoffschlüssige Fügeverfahren (z.B. das Verschweißen von Leisten an Stellen, an denen sie sich kreuzen) nicht angewendet werden können. Viele Leichtbaumaterialien mit hohen Festigkeiten, die gleichzeitig hohe Temperaturbeständigkeiten und chemische Beständigkeiten aufweisen (z.B. CFC), sind nicht selbständig stoffschlüssig fügbar, also z.B. nicht ohne Schweißhilfsmittel schweißbar. Erfindungsgemäß werden also besonders feste und verwindungssteife Leichtbautragroste zugänglich, die gleichzeitig hohe Temperaturbeständigkeiten und chemischen Beständigkeiten aufweisen und bei welchen jedes Einzelteil leicht ausgetauscht werden kann, ohne dass hierfür stoffschlüssige Leistenverbindungen gelöst werden müssten.

Bei besonders bevorzugten erfindungsgemäßen Tragrosten weisen die Tragleisten (1) und/oder Dachleisten (2) einen Faserverbundwerkstoff auf. Aus diesen Werkstoffen lassen sich erfindungsgemäße Tragroste herstellen, die besonders leicht aber zugleich verwindungssteif sind und darüber hinaus eine besonders hohe Temperaturbeständigkeit und chemische Beständigkeit bieten.

Vorzugsweise umfasst der Faserverbundwerkstoff mindestens ein textiles Flächengebilde. Dies bewirkt, dass im Gegensatz zu (auf Kurzfasern basierenden) faserverstärkten Kunststoffen durchgängige Faserstränge die Festigkeiten und Steifigkeiten nochmals wesentlich erhöhen. So wird der Tragrost mechanisch noch belastbarer oder dieselbe Belastbarkeit lässt sich mit weniger und/oder dünneren bzw. schmaleren Leisten realisieren. Bei den textilen Flächengebilden kann es sich z.B. um Vliese, Gestricke, Gewebe oder Gelege handeln, wobei Gewebe und Gelege, insbesondere Gelege, bevorzugt sind. Erfindungsgemäß ist es besonders bevorzugt, wenn mindestens ein textiles Flächengebilde ein unidirektionales Gelege ist. Im Gegensatz zum Gewebe verlaufen die Faserstränge gerade und werden nicht durch das System Kette und Schuss vielfach umgelenkt. Dadurch ergibt sich eine nochmals optimierte Festigkeit und Steifigkeit bei gleichzeitig effizienter Herstellung der Leisten und des Tragrosts.

Bei ganz besonders bevorzugten erfindungsgemäßen Tragrosten umfasst das nicht selbständig stoffschlüssig fügbare Material oder der Faserverbundwerkstoff Carbonfasern. Dies bewirkt höchste Festigkeit bei gleichzeitig hoher Temperaturbeständigkeit und ausgezeichneter chemischer Beständigkeit des Kohlenstoffs. So kann z.B. das Gelege und insbesondere das unidirektionale Gelege Carbonfasern umfassen; vorzugsweise handelt es sich bei dem textilen Flächengebilde also um ein Carbonfasergelege oder um ein unidirektionales Carbonfasergelege. Die Dachleisten und/oder die Tragleisten können carbonfaserverstärkten Kohlenstoff (CFC), carbonfaserverstärkten Kunststoff (CFK) oder glasfaserverstärkten Kunststoff (GFK) aufweisen oder aus CFC, CFK oder GFK bestehen.

Dachleisten können jeweils einstückig oder mehrstückig ausgebildet sein.

Wenn der Tragrost schon beim Aufbau einer (segmentierten) Kolonne von oben in die Kolonne eingelegt werden kann, bevor der Kopf der Kolonne aufgesetzt wird, ist es im Allgemeinen vorteilhaft, wenn alle Dachleisten einstückig ausgebildet sind. Dann sind die Dachleisten besonders stabil und ein besonders verwindungssteifer und mechanisch besonders belastbarer Tragrost lässt sich mit besonders dünnen und/oder schmalen Leisten verwirklichen.

Wenn der Tragrost hingegen in eine kopf- und sumpfseitig verschlossene Kolonne eingelegt werden soll, ist dies nur über eine seitlich an der Kolonne angeordnete Öffnung möglich, z.B. über ein sogenanntes Mannloch. Der Durchmesser des Mannlochs ist in der Regel deutlich kleiner, als der Durchmesser der Kolonne, so dass der Tragrost sich über das Mannloch nicht am Stück in die Kolonne einsetzen lässt. Es ist dann bevorzugt, wenn mindestens eine Dachleiste mindestens zwei separate Dachleistenabschnitte aufweist, die zu der Dachleiste zusammengefügt sind. Vorzugsweise ist bei dem erfindungsgemäßen Tragrost dann keine Dachleiste und kein Dachleistenabschnitt länger als 75 % der Länge der längsten Dachleiste. Es ist besonders bevorzugt, wenn keine Dachleiste und kein Dachleistenabschnitt länger als 55 % der Länge der längsten Dachleiste ist. Dies führt zu einer deutlichen Erleichterung der Montage des Tragrosts über ein Mannloch. Es können mehrere vormontierte Tragrostausschnitte, die nachstehend detaillierter beschrieben werden, durch das Mannloch in die Kolonne eingebracht und durch Verbinden von Dachleistenabschnitten der verschiedenen, nebeneinanderliegenden Tragrostausschnitte in der Kolonne zum Tragrost verbunden werden. Dies verkürzt die in der Kolonne durchzuführenden Tragrostmontagearbeiten erheblich, denn sämtliche Tragrostausschnitte können schon außerhalb der Kolonne vormontiert werden. Dieselben Erleichterungen ergeben sich auch bei der Demontage des Tragrosts.

Zwei zu einer Dachleiste oder zu einem längeren Dachleistenabschnitt verbindbare Dachleistenabschnitte können je einen Überlappungsbereich aufweisen, in dem die beiden verbundenen Dachleistenabschnitte überlappen. Die beiden Überlappungsbereiche weisen Elemente auf, mit denen sich die beiden Dachleistenabschnitte zu einer durchgehenden Dachleiste oder zu dem längeren Dachleistenabschnitt verbinden lassen. Die kann auf unterschiedlichste Weise erreicht werden, z.B. durch Verschrauben der überlappenden Dachleistenabschnitte mit vorzugsweise zwei oder mehr Schrauben.

Um die beiden Dachleistenabschnitte zu einer durchgehenden Dachleiste oder zu dem längeren Dachleistenabschnitt zu verbinden, kann in den beiden Überlappungsbereichen je eine Öffnung vorgesehen sein. Die beiden Öffnungen sind vorzugsweise so ausgebildet, dass ein Verbindungselement sich nur dann in beide Öffnungen einbringen lässt, wenn die beiden Dachleistenabschnitte die für die zu bildende Dachleiste gewünschte Orientierung zueinander eingenommen haben. Das Verbindungselement wird dann mit dafür vorgesehenen Verbindungselementbereichen in die beiden Öffnungen eingebracht, so dass die gewünschte Verbindung der Dachleistenabschnitte besteht. Anschließend wird das Verbindungselement in dieser Position fixiert.

Die beiden Öffnungen können Schlitze sein, wobei beide Schlitze vorzugsweise gleich breit und gleich lang sind. Sie fluchten, wenn die Dachleistenabschnitte, die für die zu bildende Dachleiste gewünschte Orientierung zueinander eingenommen haben. Als Verbindungselement kann dann ein Riegel dienen, der durch die beiden fluchtenden Schlitze geführt wird. Der Riegel liegt vorzugsweise ringsum formschlüssig an dem Leistenmaterial an, das die Schlitze umgibt. Der Riegel kann einen Kopfabschnitt aufweisen, der verhindert, dass der Riegel durch die Schlitze hindurchrutscht. Der Riegel kann außerdem eine Aufnahme für ein Riegelsicherungselement aufweisen. Die Aufnahme und das Riegelsicherungselement sind dann so ausgebildet und angeordnet, dass der Riegel sich mit aufgenommenem Riegelsicherungselement nicht mehr aus den Schlitzen herausbewegen lässt. Bei dem Riegelsicherungselement kann es sich z.B. um das in Figuren 3A-3D des Gebrauchsmusters DE 20 2010 015 436 U1 gezeigte Element handeln. Riegel und Riegelsicherungselement können aus dem Material gefertigt sein, aus dem auch die Dachleisten und/oder Tragleisten gefertigt sind.

Verschiedene Dachleistenabschnitte einer Dachleiste lassen sich also vorzugsweise reversibel verbinden und voneinander lösen. Dies hat den Vorteil, dass der Tragrost über das Mannloch auch wieder demontiert werden kann.

Es ist bevorzugt, wenn sämtliche Dachleisten und Dachleistenabschnitte kürzer sind, als die längste Tragleiste. Es ist besonders bevorzugt, wenn keine Dachleiste und kein Dachleistenabschnitt länger als 55 % der Länge der längsten Tragleiste ist. Es ist ganz besonders bevorzugt, wenn sämtliche Dachleisten und Dachleistenabschnitte höchstens halb so lang sind, wie die längste Tragleiste.

Die Erfindung betrifft also auch einen Tragrostausschnitt, der über ein Mannloch in eine Kolonne einbringbar ist, aufweisend Tragleisten und einander entgegengesetzt geneigte Dachleistenabschnitte, wobei Tragleisten und Dachleistenabschnitte einander kreuzen, die Neigung jedes Dachleistenabschnitts durch mindestens eine in mindestens eine Tragleiste eingebrachte Dachleistenaufnahmenut definiert ist, in welche der Dachleistenabschnitt aufgenommen ist und die Ausrichtung jeder Tragleiste durch mindestens eine Tragleistenaufnahmenut stabilisiert ist, in welche die Tragleiste aufgenommen ist. Es kann mindestens eine der Tragleistenaufnahmenute in mindestens einen Dachleistenabschnitt eingebracht sein.

Das hierin im Hinblick auf die verschiedenen Typen von Leisten (insbesondere Tragleisten, Dachleisten, aber auch Abstandsleisten) und im Hinblick auf die Dachleistenaufnahmenut(e) sowie Tragleistenaufnahmenut(e) geschriebene, gilt genauso auch im Zusammenhang mit dem Tragrostausschnitt.

Die Erfindung betrifft ferner ein Bauteilset für einen erfindungsgemäßen Tragrost oder einen erfindungsgemäßen Tragrostausschnitt, aufweisend Tragleisten und Dachleisten oder Dachleistenabschnitte, wobei je Dachleiste oder je Dachleistenabschnitt mindestens eine in mindestens eine Tragleiste eingebrachte Dachleistenaufnahmenut vorhanden ist, in welche die Dachleisten oder die Dachleistenabschnitte so aufgenommen werden können, dass die Dachleisten oder die Dachleistenabschnitte einander entgegengesetzt geneigt sind, und je Tragleiste mindestens eine in mindestens eine Dachleiste oder in mindestens einen Dachleistenabschnitt eingebrachte Tragleistenaufnahmenut vorhanden ist, in welche die Tragleisten so aufgenommen werden können, dass die Ausrichtung jeder Tragleiste stabilisiert ist.

Das hierin im Hinblick auf die verschiedenen Typen von Leisten (insbesondere Tragleisten, Dachleisten, aber auch Abstandsleisten) und im Hinblick auf die Dachleistenaufnahmenut(e) sowie Tragleistenaufnahmenut(e) geschriebene, gilt genauso auch im Zusammenhang mit dem Bauteilset.

Die Erfindung wird durch die nachfolgenden Figuren und Ausführungsbeispiele veranschaulicht, ohne darauf beschränkt zu sein.
- Figur 1: zeigt einen Ausschnitt eines erfindungsgemäßen Bauteilsets zur Herstellung eines erfindungsgemäßen Tragrosts
- Figur 2: zeigt einen Ausschnitt eines anderen erfindungsgemäßen Bauteilsets zur Herstellung eines anderen erfindungsgemäßen Tragrosts
- Figur 3A: zeigt ein erfindungsgemäßes Bauteilset
- Figur 3B: zeigt eine Seitenansicht eines erfindungsgemäßen Tragrosts, der aus dem in Figur 3A gezeigten Bauteilset hergestellt ist
- Figur 3C: zeigt einen Ausschnitt der in Figur 3B gezeigten Seitenansicht
- Figur 3D: zeigt einen Ansicht des erfindungsgemäßen Tragrosts aus Figur 3B von oben

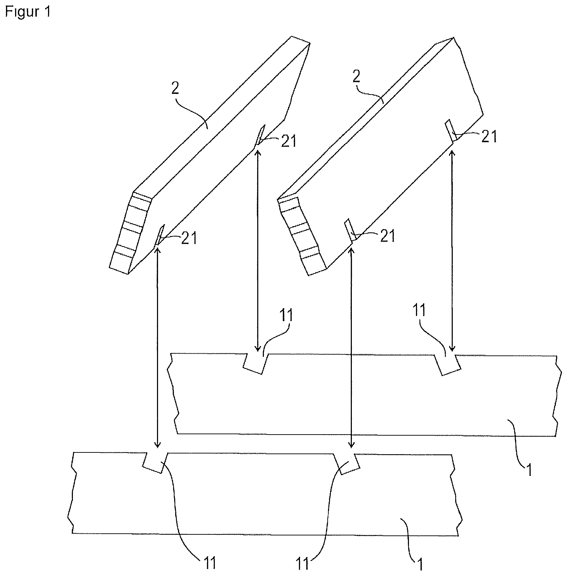

Im Ausschnitt der Figur 1 ist mit Pfeilen angedeutet, wie in die Tragleisten 1 eingebrachten Dachleistenaufnahmenuten 11 und in die Dachleisten 2 eingebrachte Tragleistenaufnahmennuten 21 bei bestimmten, erfindungsgemäß besonders bevorzugten Tragrosten ineinandergreifen.

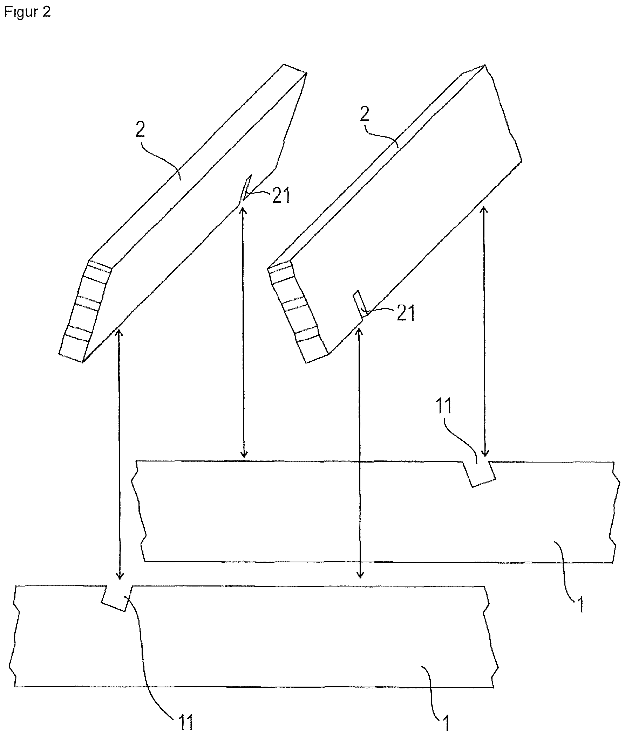

Es ist gemäß der vorliegenden Erfindung zwar bevorzugt, dass Dachleistenaufnahmenuten 11 und Tragleistenaufnahmennuten 21 ineinandergreifen, z.B. so wie in Figur 1 gezeigt. Dass dies nicht zwingend der Fall sein muss, zeigt Figur 2. In Figur 2 ist, wie Anspruch 1 ebenfalls zulässt, die Neigung jeder Dachleiste 2 durch eine in eine Tragleiste 1 eingebrachte Dachleistenaufnahmenut 11 definiert, in welche die jeweilige Dachleiste 2 aufgenommen ist. Außerdem ist die Ausrichtung jeder Tragleiste 1 durch mindestens eine Tragleistenaufnahmenut 21 stabilisiert ist, in welche die Tragleiste 1 aufgenommen ist. In dem hier gezeigten Beispiel ist je eine der Tragleistenaufnahmenute 21 in je eine der Dachleisten 2 eingebracht.

In allen Figuren ist die Breite sämtlicher Nuten 11, 21 je exakt an die Dicke der in die jeweilige Nut aufzunehmende Dach- 2 bzw. Tragleiste 1 angepasst, so dass die Leisten 1, 2 in die Nuten 11, 21 form- und reibschlüssig aufgenommen werden können.

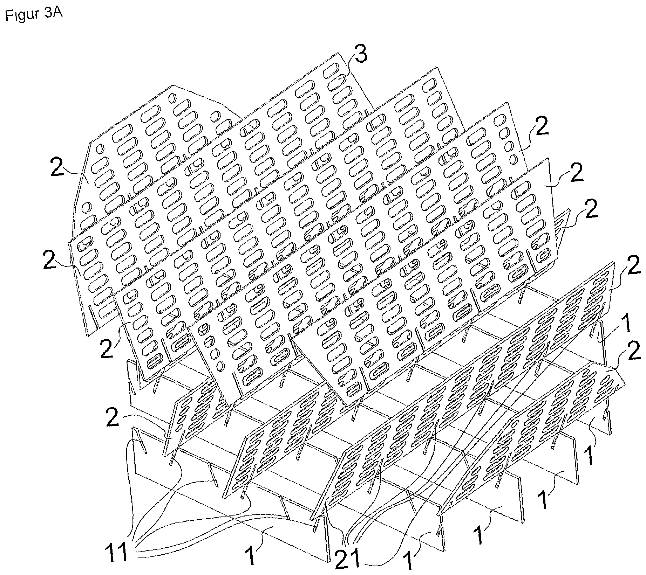

Aus Gründen der Übersichtlichkeit sind in die Dachleisten eingebrachte Fluiddurchtrittsöffnungen in Figuren 1 und 2 nicht dargestellt. Hingegen sind sie z.B. in dem Bauteilset der Fig. 3A dargestellt.

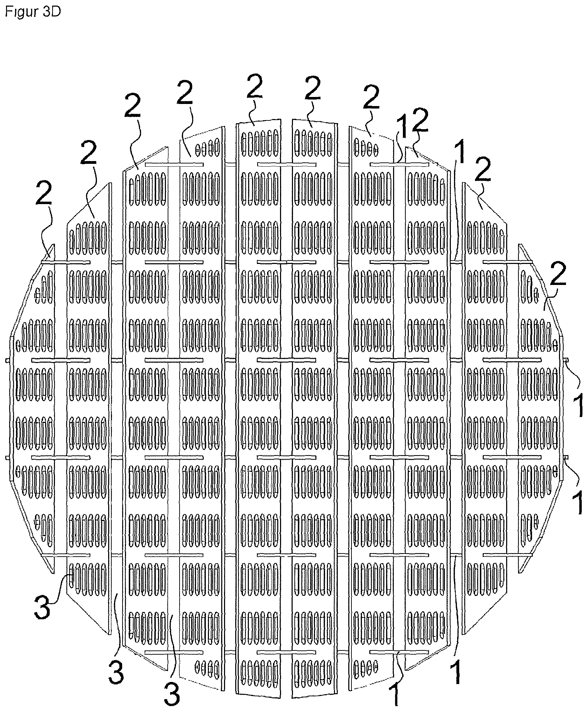

In Figuren 3A, 3B und 3D sind sämtliche Tragleisten 1 und sämtliche einander entgegengesetzt geneigte Dachleisten 2 des Tragrosts bzw. Bauteilsets gut erkennbar. Tragleisten 1 und Dachleisten 2 kreuzen einander. Die Ansicht von oben der Figur 3D zeigt dies in ähnlicher Weise wie die weiter oben beschriebene Projektion. Aus Figuren 3A und 3B ist gut zu erkennen, dass die Neigung jeder Dachleiste **2** durch in Tragleisten **1** eingebrachte Dachleistenaufnahmenute **11** definiert ist. Insbesondere Figur 3A zeigt die Dachleistenaufnahmenute **11,** die nicht orthogonal zur jeweiligen Oberkante der jeweiligen Tragleisten eingebracht sind, sondern geneigt. Die Neigung der Dachleistenaufnahmenute **11** definiert die Neigung der darin jeweils formschlüssig aufzunehmenden bzw. aufgenommenen Dachleiste **2.** Die Ausrichtung jeder Tragleiste **1** wird durch mehrere Tragleistenaufnahmenute **21** stabilisiert, in welche die Tragleiste **1** aufgenommen wird (Fig. 3A) bzw. ist (Fig. 3B bis 3D). In dem hier gezeigten Beispiel liegt kein weiteres Bauteil vor, sondern nur Tragleisten **1** und Dachleisten **2.** Die Tragleistenaufnahmenute **21** sind also in die Dachleisten **2** eingebracht. Im hier gezeigten Beispiel ist an jeder Stelle, an der eine Tragleiste **1** eine Dachleiste **2** kreuzt, eine Dachleistenaufnahmenut **11** in die Tragleiste **1** eingebracht ist und eine Tragleistenaufnahmenut **21** in die Dachleiste **2** eingebracht. An jeder Stelle, an der eine Tragleiste **1** eine Dachleiste **2** kreuzt, greifen eine Dachleistenaufnahmenut **11** und eine Tragleistenaufnahmenut **21** ineinander.

Aus Figur 3C ist sehr gut zu erkennen, dass an mindestens einer Stelle, an der eine Tragleiste **1** eine Dachleiste **2** kreuzt, die Tiefe **T** der Tragleistenaufnahmenut **21** kleiner ist, als die Höhe **H** eines über die Tragleiste **1** hinausstehenden Abschnitts der Dachleiste **2.**

Bei dem in Fig. 3A bis 3D gezeigten Beispiel, weist der fertig zusammengesteckte Tragrost Fluiddurchtrittsöffnungen **3** in den Dachleisten **2** und zwischen den Dachleisten **2** auf. Zwischen den Dachleisten vorliegende Fluiddurchtrittsöffnungen **3** befinden sich sowohl zwischen den unteren Längskanten der Dachleisten **2,** wie auch zwischen den oberen Längskanten der Dachleisten **2.**

Das Material der Leisten ist aus den Figuren nicht zu erkennen. In dem hier gezeigten Beispiel bestehen die Dachleisten **2** und Tragleisten **1** aus carbonfaserverstärktem Kohlenstoff (CFC). Dabei handelt es sich um einen nicht selbständig stoffschlüssig fügbaren Faserverbundwerkstoff, der - im Fall des hier verwendeten CFC - ein multidirektionales Gelege (mehrere Schichten aufeinander angeordneter unidirektionaler Gelege) umfasst.

Die Tragleisten **1** und die Dachleisten **2** einschließlich sämtlicher Nuten **11, 21** und der in den Dachleisten angeordneten Fluiddurchtrittsöffnungen wurden durch Wasserstrahlschnitt aus entsprechendem CFC-Plattenmaterial hergestellt.

## Patentansprüche

1. Tragrost für Füllkörperpackungen, aufweisend Tragleisten (1) und einander entgegengesetzt geneigte Dachleisten (2), wobei
Tragleisten (1) und Dachleisten (2) einander kreuzen,
die Neigung jeder Dachleiste (2) durch mindestens eine in mindestens eine Tragleiste (1) eingebrachte Dachleistenaufnahmenut (11) definiert ist, in welche die Dachleiste (2) aufgenommen ist und
die Ausrichtung jeder Tragleiste (1) durch mindestens eine Tragleistenaufnahmenut (21) stabilisiert ist, in welche die Tragleiste (1) aufgenommen ist.

2. Tragrost nach Anspruch 1, wobei mindestens eine der Tragleistenaufnahmenute (21) in mindestens eine Dachleiste (2) eingebracht ist.

3. Tragrost nach Anspruch 1, wobei die Neigung jeder Dachleiste (2) durch mehr als eine, in verschiedene Tragleisten (1) eingebrachte Dachleistenaufnahmenute (11) definiert ist.

4. Tragrost nach Anspruch 1, wobei an mindestens einer Stelle, an der eine Tragleiste (1) eine Dachleiste (2) kreuzt, eine Dachleistenaufnahmenut (11) und eine Tragleistenaufnahmenut (21) ineinandergreifen.

5. Tragrost nach Anspruch 1, wobei an mindestens einer Stelle, an der eine Tragleiste (1) eine Dachleiste (2) kreuzt, die Tiefe (T) der Tragleistenaufnahmenut (21) kleiner ist, als die Höhe (H) eines über die Tragleiste (1) hinausstehenden Abschnitts der Dachleiste (2).

6. Tragrost nach Anspruch 1, aufweisend Fluiddurchtrittsöffnungen (3) in und/oder zwischen Dachleisten (2).

7. Tragrost nach Anspruch 1, wobei Tragleisten (1) und/oder Dachleisten (2) ein nicht selbständig stoffschlüssig fügbares Material aufweisen.

8. Tragrost nach Anspruch 1, wobei Tragleisten (1) und/oder Dachleisten (2) einen Faserverbundwerkstoff aufweisen.

9. Tragrost nach Anspruch 8, wobei der Faserverbundwerkstoff mindestens ein textiles Flächengebilde umfasst.

10. Tragrost nach Anspruch 9, wobei mindestens ein textiles Flächengebilde ein unidirektionales Gelege ist.

11. Tragrost nach Anspruch 7, 8, 9 oder 10, wobei das nicht selbständig stoffschlüssig fügbare Material oder der Faserverbundwerkstoff Carbonfasern umfassen.

12. Tragrost nach Anspruch 1, wobei mindestens eine Dachleiste (2) mindestens zwei separate Dachleistenabschnitte aufweist, die zu der Dachleiste (2) zusammengefügt sind.

13. Tragrost nach Anspruch 11, wobei sämtliche Dachleisten (2) und Dachleistenabschnitte kürzer sind, als die längste Tragleiste (1).

14. Tragrostausschnitt für Füllkörperpackungen, der über ein Mannloch in eine Kolonne einbringbar ist, aufweisend Tragleisten (1) und einander entgegengesetzt geneigte Dachleistenabschnitte, wobei
Tragleisten (1) und Dachleistenabschnitte (2) einander kreuzen,
die Neigung jedes Dachleistenabschnitts durch mindestens eine in mindestens eine Tragleiste (1) eingebrachte Dachleistenaufnahmenut (11) definiert ist, in welche der Dachleistenabschnitt (2) aufgenommen ist und
die Ausrichtung jeder Tragleiste (1) durch mindestens eine Tragleistenaufnahmenut (21) stabilisiert ist, in welche die Tragleiste (1) aufgenommen ist.

15. Bauteilset für einen Tragrost gemäß einem der Ansprüche 1 bis 13 oder für einen Tragrostausschnitt gemäß Anspruch 14, aufweisend
Tragleisten (1) und Dachleisten (2) oder Dachleistenabschnitte, wobei
je Dachleiste (2) oder je Dachleistenabschnitt mindestens eine in mindestens eine Tragleiste (1) eingebrachte Dachleistenaufnahmenut (11) vorhanden ist, in welche die Dachleisten (2) oder die Dachleistenabschnitte so aufgenommen werden können, dass die Dachleisten (2) oder die Dachleistenabschnitte einander entgegengesetzt geneigt sind, und
je Tragleiste (1) mindestens eine in mindestens eine Dachleiste (2) oder in mindestens einen Dachleistenabschnitt eingebrachte Tragleistenaufnahmenut (21) vorhanden ist, in welche die Tragleisten (1) so aufgenommen werden können, dass die Ausrichtung jeder Tragleiste (1) stabilisiert ist.

## Claims

1. Support grid for filling material packing, comprising support strips (1) and comprising top strips (2) which are inclined relative to one another in opposite directions, wherein
support strips (1) and top strips (2) intersect one another,
the inclination of each top strip (2) is defined by at least one top strip receiving groove (11), which is made in at least one support strip (1) and in which the top strip (2) is received, and
the orientation of each support strip (1) is stabilised by at least one support strip receiving groove (21), in which the support strip (1) is received.

2. Support grid according to claim 1, wherein at least one of the support strip receiving grooves (21) is made in at least one top strip (2).

3. Support grid according to claim 1, wherein the inclination of each top strip (2) is defined by more than one top strip receiving groove (11) made in different support strips (1).

4. Support grid according to claim 1, wherein a top strip receiving groove (11) and a support strip receiving groove (21) interlock at at least one point at which a support strip (1) intersects a top strip (2).

5. Support grid according to claim 1, wherein, at at least one point at which a support strip (1) intersects a top strip (2), the depth (T) of the support strip receiving groove (21) is less than the height (H) of a portion of the top strip (2) protruding beyond the support strip (1).

6. Support grid according to claim 1, comprising fluid passage openings (3) in and/or between top strips (2).

7. Support grid according to claim 1, wherein support strips (1) and/or top strips (2) comprise a material which cannot be independently integrally bonded.

8. Support grid according to claim 1, wherein support strips (1) and/or top strips (2) comprise a fibre composite material.

9. Support grid according to claim 8, wherein the fibre composite material comprises at least one textile fabric.

10. Support grid according to claim 9, wherein at least one textile fabric is a unidirectional scrim.

11. Support grid according to claim 7, claim 8, claim 9 or claim 10, wherein the material, which cannot be independently integrally bonded, or the fibre composite material comprise carbon fibres.

12. Support grid according to claim 1, wherein at least one top strip (2) has at least two separate top strip portions which are joined together to form the top strip (2).

13. Support grid according to claim 11, wherein all top strips (2) and top strip portions are shorter than the longest support strip (1).

14. Support grid cutout for filling material packing, which cutout can be inserted into a column via a manhole, comprising support strips (1) and comprising top strip portions which are inclined relative to one another in opposite directions, wherein
support strips (1) and top strip portions (2) intersect one another,
the inclination of each top strip portion is defined by at least one top strip receiving groove (11) made in at least one support strip (1), in which top strip receiving groove the top strip portion (2) is received, and
the orientation of each support strip (1) is stabilised by at least one support strip receiving groove (21), in which the support strip (1) is received.

15. Component set for a support grid according to any of claims 1 to 13 or for a support grid cutout according to claim 14, comprising
support strips (1) and top strips (2) or top strip portions, wherein
for each top strip (2) or each top strip portion there is at least one top strip receiving groove (11) made in at least one support strip (1), in which top strip receiving groove the top strips (2) or the top strip portions can be received such that the top strips (2) or the top strip portions are inclined relative to one another in opposite directions, and
for each support strip (1) there is at least one support strip receiving groove (21) made in at least one top strip (2) or in at least one top strip portion, in which support strip receiving groove the support strips (1) can be received such that the orientation of each support strip (1) is stabilised.

## Revendications

1. Grille de support pour emballages de corps de remplissage, comportant des baguettes de support (1) et des baguettes de toit (2) inclinées de manière opposée les unes par rapport aux autres, dans laquelle
les baguettes de support (1) et les baguettes de toit (2) se croisent,
l'inclinaison de chaque baguette de toit (2) est définie par au moins une rainure de réception de baguette de toit (11) ménagée dans au moins une baguette de support (1) et dans laquelle la baguette de toit (2) est reçue et
l'orientation de chaque baguette de support (1) est stabilisée par au moins une rainure de réception de baguette de support (21), dans laquelle la baguette de support (1) est reçue.

2. Grille de support selon la revendication 1 dans laquelle l'au moins une des rainures de réception de baguette de support (21) est ménagée dans au moins une baguette de toit (2).

3. Grille de support selon la revendication 1, dans laquelle l'inclinaison de chaque baguette de toit (2) est définie par plus d'une rainure de réception de baguette de toit (11) ménagée dans différentes baguettes de support (1).

4. Grille de support selon la revendication 1, dans laquelle, à au moins un point au niveau duquel une baguette de support (1) croise une baguette de toit (2), une rainure de réception de baguette de toit (11) et une rainure de réception de baguette de support (21) viennent en prise l'une dans l'autre.

5. Grille de support selon la revendication 1, dans laquelle, à au moins un point au niveau duquel une baguette de support (1) croise une baguette de toit (2), la profondeur (T) de la rainure de réception de baguette de support (21) est inférieure à la hauteur (H) d'une section de la baguette de toit (2) faisant saillie au-delà de la baguette de support (1).

6. Grille de support selon la revendication 1, comportant des ouvertures de passage de fluide (3) dans et/ou entre les baguettes de toit (2).

7. Grille de support selon la revendication 1, dans laquelle les baguettes de support (1) et/ou les baguettes de toit (2) comportent un matériau ne pouvant pas être joint par liaison de matière de manière indépendante.

8. Grille de support selon la revendication 1, dans laquelle les baguettes de support (1) et/ou les baguettes de toit (2) comportent un matériau composite renforcé par des fibres.

9. Grille de support selon la revendication 8, dans laquelle le matériau composite renforcé par des fibres comprend au moins une structure textile plane.

10. Grille de support selon la revendication 9, dans laquelle l'au moins une structure textile plane est une nappe unidirectionnelle.

11. Grille de support selon la revendication 7, 8, 9 ou 10, dans laquelle le matériau ne pouvant pas être joint par liaison de matière de manière indépendante ou le matériau composite renforcé par des fibres comprend des fibres de carbone.

12. Grille de support selon la revendication 1, dans laquelle au moins une baguette de toit (2) comporte au moins deux sections de baguette de toit séparées, lesquelles sont assemblées pour former la baguette de toit (2).

13. Grille de support selon la revendication 11, dans laquelle toutes les baguettes de toit (2) et les sections de baguette de toit sont plus courtes que la baguette de support (1) la plus longue.

14. Section de grille de support pour emballages de corps de remplissage, laquelle peut être introduite dans une colonne par l'intermédiaire d'un trou d'homme, comportant des baguettes de support (1) et des sections de baguette de toit inclinées de manière opposée les unes par rapport aux autres, dans laquelle
les baguettes de support (1) et les sections de baguette de toit (2) se croisent,
l'inclinaison de chaque section de baguette de toit est définie par au moins une rainure de réception de baguette de toit (11) ménagée dans au moins une baguette de support (1) et dans laquelle la section de baguette de toit (2) est reçue et
l'orientation de chaque baguette de support (1) est stabilisée par l'au moins une rainure de réception de baguette de support (21) dans laquelle la baguette de support (1) est reçue.

15. Ensemble de composants pour une grille de support selon l'une quelconque des revendications 1 à 13 ou pour une section de grille de support selon la revendication 14, comportant
des baguettes de support (1) et des baguettes de toit (2) ou des sections de baguette de toit, dans lequel
pour chaque baguette de toit (2) ou pour chaque section de baguette de toit, au moins une rainure de réception de baguette de toit (11) ménagée dans au moins une baguette de support (1) est fournie, dans laquelle rainure les baguettes de toit (2) ou les sections de baguette de toit peuvent être reçues de telle sorte que les baguettes de toit (2) ou les sections de baguette de toit sont inclinées de manière opposée les unes par rapport aux autres, et
pour chaque baguette de support (1), au moins une rainure de réception de baguette de support (21) ménagée dans au moins une baguette de toit (2) ou dans au moins une section de baguette de toit est fournie, dans laquelle rainure les baguettes de support (1) peuvent être reçues de telle sorte que l'orientation de chaque baguette de support (1) est stabilisée.
